# EUROPEAN PATENT SPECIFICATION

(11) **EP 3 064 051 B1**
(45) Date of publication and mention of the grant of the patent: **10.04.2019**
(21) Application number: 16157177.3
(22) Date of filing: 24.02.2016
(51) Int. Cl.: A01D 34/68

(54) **MOTORIZED LAWN MOWER PROVIDED WITH A CONTROL LEVER**
MOTORISIERTER RASENMÄHER MIT STEUERHEBEL
TONDEUSE À GAZON MOTORISÉE POURVUE D'UN LEVIER DE COMMANDE

(30) Priority: 03.03.2015 IT UB20150075
(43) Date of publication of application: 07.09.2016
(73) Proprietor: Stiga S.p.A. in breve anche St. S.p.A., 31033 Castelfranco Veneto (TV) (IT)
(72) Inventor: ZONTA, Paolo, 31033 Castelfranco Veneto (TV) (IT)
(74) Representative: Mittler, Andrea

(56) References cited:
- EP-A2- 1 884 153
- US-A- 4 667 459
- US-A- 4 813 214
- US-A1- 2013 081 500

## Description

The present invention relates to a motorized lawn mower provided with a control lever.

It is known how lawn mowers can comprise control levers suitable to vary a magnitude or a parameter related to the operation of the lawn mower itself, such as for example the forward speed of the lawn mower, the engine rotation speed, the position of the deflector or the cutting height.

American Patent US-6769501B2 describes a control lever for a lawn mower comprising a maneuverable portion and a circular portion pivotally engaged on a pin.

The problem associated with the aforesaid type of lever concerns the vibrations which can occur during the operation of the lawn mower and which can affect the lever position previously set by the operator, thus causing an undesired variation of the magnitude controlled by the control lever.

For example, Patent Application WO-2013066526 describes a lawn mower control lever comprising a maneuverable portion and a circular portion pivotally engaged on a pin. The circular portion of the lever comprises an inner portion positioned at a smaller radius length than the radius length of the circular portion of the lever. Such an inner portion of the lever mounts a multitude of stops. A housing then comprises a piece with a multitude of grooves which can be engaged by the stops. The grooves have a curvilinear shape consisting of a concave portion in the middle contoured by two convex portions. The lever is suitable to rotate about the pin thus causing each stop to pass from one groove to the next.

US-4813214A discloses a motorized lawn mower comprising a cutting plate, provided with wheels, to which is attached a handlebar, and a control apparatus configured to vary at least one parameter related to the operation of the lawn mower, said control apparatus comprising a manually operable lever which is movable with respect to a casing between a first and a second limit position corresponding respectively to a maximum value and a minimum value of said parameter, said lever (2) comprises a circular portion which is pivotally coupled to the casing.

It is the object of the prevent invention to provide a lawn mower which is not affected by the problems of the modification of the lever position due to vibrations during the operation of the lawn mower. It is a further object of the present invention to keep the movement of the control lever on a single plane and according to a trajectory which is always linear.

According to the invention, such an object is achieved by a motorized lawn mower comprising a cutting plate, provided with wheels, to which a handlebar is connected, and a control apparatus configured to vary at least one parameter related to the operation of the lawn mower, said control apparatus comprising a manually operable lever which is movable with respect to a casing between a first and a second limit position, corresponding to a maximum value and a minimum value of said parameter, respectively, said control apparatus characterized in that said lever comprises a circular portion which is pivotally coupled to the casing and provided with elastic matching parts suitable to engage at least one toothed sector inside the casing.

These and other features of the present invention will become more apparent from the following detailed description of a practical embodiment thereof, shown by way of non-limitative example in the accompanying drawings, in which:
Figure 1 shows a lawn mower according to the present invention, comprising a control apparatus;
Figure 2 shows an axonometric view of the control apparatus on the lawn mower in Fig. 1;
Figure 3 shows a sectional view of the control apparatus in Fig. 2;
Figure 4 shows a detail of the sectional view of the control apparatus in Fig. 3;

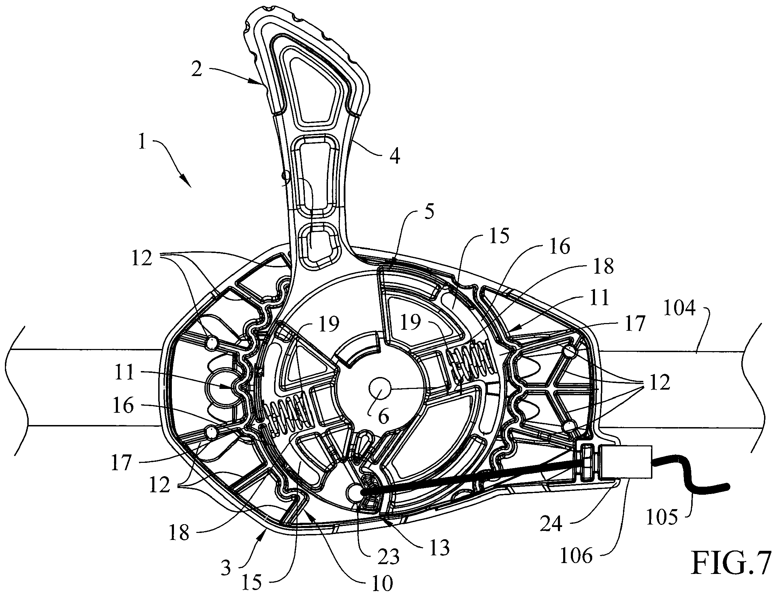

Figures 5-7 show certain operating steps of the control apparatus in Fig. 2.

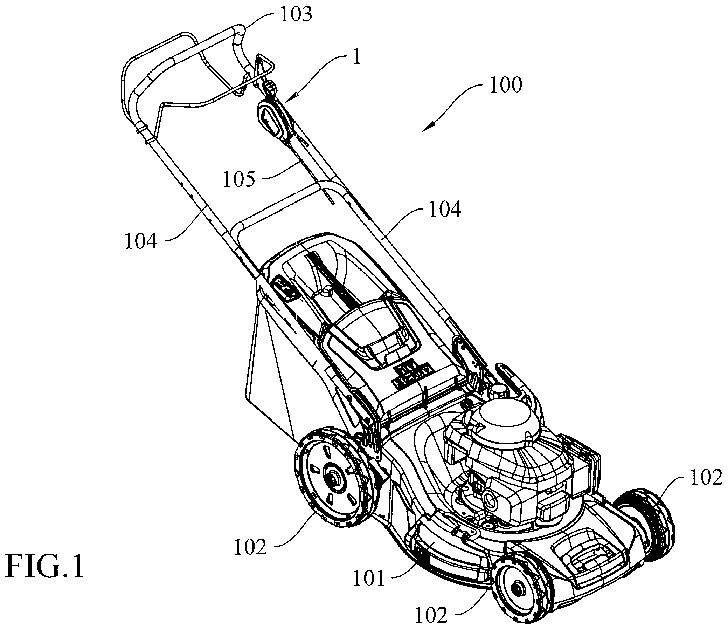

Figure 1 shows a motorized lawn mower 100 according to the present invention. The lawn mower 100 essentially comprises a cutting plate 101 provided with wheels 102 to which a handlebar 103 is connected through a pair of rods 104, said handlebar 103 being suitable to be grasped by an operator to operate the lawn mower 100.

The lawn mower 100 further comprises a control apparatus 1 configured to vary a magnitude or a parameter related to the operation of the lawn mower 100. From now on, reference will be made, by way of nonlimiting example, to a control apparatus 1 for varying the forward speed of the lawn mower 100, although different types of use of the control apparatus 1 are possible, such as for example for varying the engine rotation speed, the position of the deflector or the cutting height.

For convenience of use by the operator, the control apparatus 1 is fixed to one of the rods 104, and is particularly positioned close to handlebar 103.

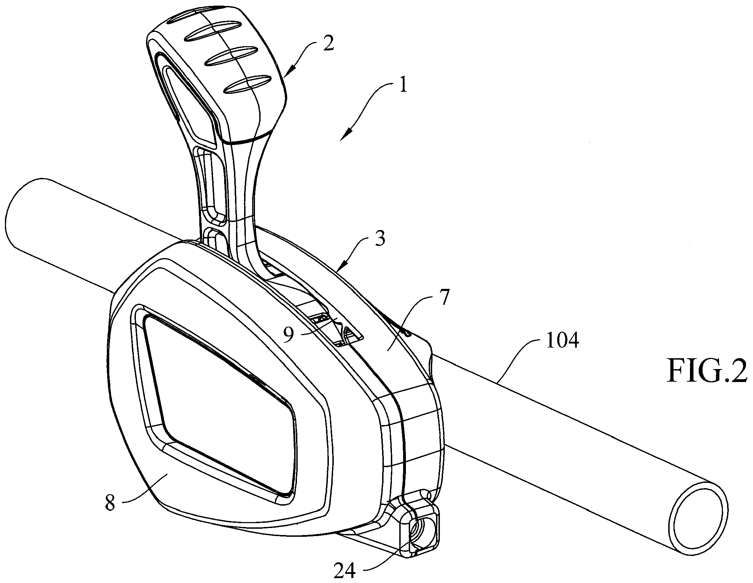

The control apparatus 1 (Fig. 2) comprises a manually operable lever 2 which is movable with respect to a casing 3, inside of which it is partially accommodated. Lever 2 is movable along a single plane between a first and a second limit position corresponding to a minimum speed (e.g. null speed) and to a maximum forward speed, respectively, of the lawn mower 100. Preferably, said single plane of movement of lever 2 is a vertical plane. As is easily understood, the movement of lever 2 occurs according to a trajectory which is always linear (a straight line).

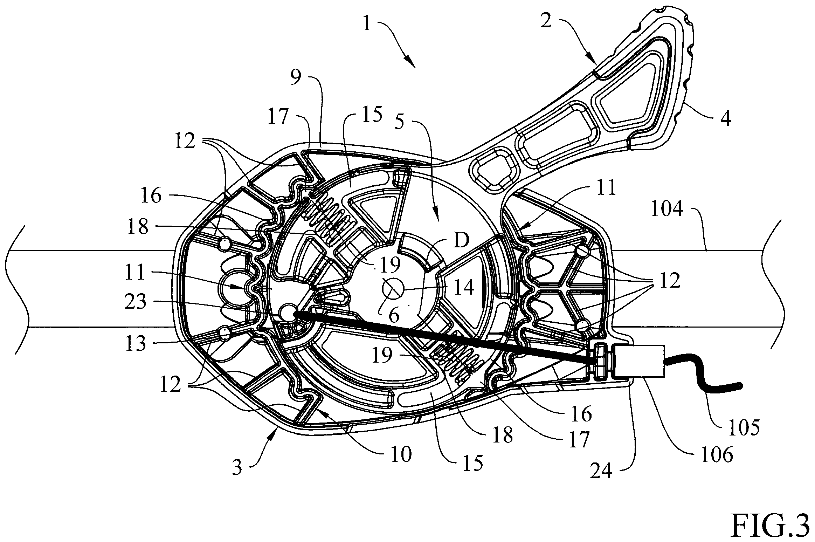

Lever 2 comprises a maneuverable portion 4 and a circular portion 5 which is pivotally coupled to a pin 6 inside casing 3 (Fig. 3). The circular portion 5 is accommodated inside casing 3, while the maneuverable portion 4, which departs from the circular portion 5, is outside casing 3 and comes out of an opening 9 on the top of casing 3 (Fig. 2). The circular portion 5 comprises at least one connection 13 (Fig. 3) suitable to connect one end of a control cable 105 of the lawn mower 100, whereby a rotation of lever 2 corresponds to a stretch or a release of the control cable 105 and a variation of the magnitude involved. In the example at hand, this is the control cable 105 of the forward speed of the lawn mower 100, and upon a rotation of lever 2, there is a relative acceleration or deceleration of the lawn mower (100). The control cable 105 is led into the casing through an inlet 24 of casing 3 and a coupling element 106.

The circular portion 5 is disc-shaped with a central hole 14 suitable to be inserted onto said pin 6 inside the casing 3, and comprises a pair of hollow sectors 15 which are advantageously arranged symmetrically to the central hole 14 along a diameter D of said circular portion 5. Each of said hollow sectors 15 has such a shape as to create a leaf spring with an arc portion 16 which is susceptible to introversion.

Each arc portion 16 centrally includes a matching part 17 which is radially directed outwardly of the circular portion 5; therefore, there are two elastic portions of said arc portion 16 which are suitable to bend so as to allow the movement of the matching part 17 in the radial direction. Preferably, the matching parts 17 substantially have the shape of a triangular prism.

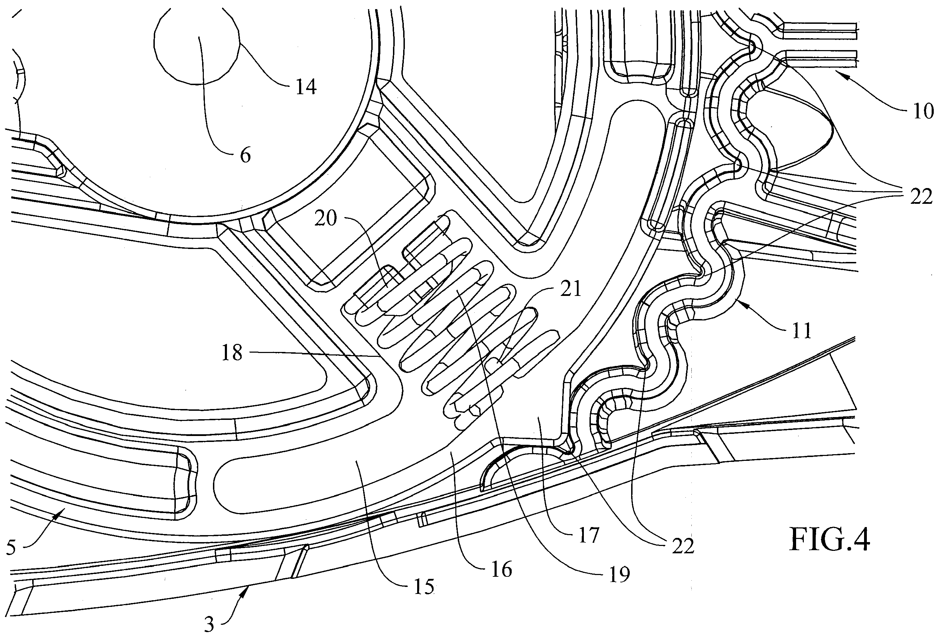

The hollow sectors 15 each comprise a radial housing 18 for accommodating elastic means 19 which are suitable to offer resistance to the introversion of the arc portion 16 (Fig. 4). Each radial housing 18 comprises a first and a second protrusion 20, 21, which are opposite to each other and are suitable to house said elastic means 19. For example, the elastic means 19 may be represented by a spring which is located by means of compression by inserting the ends thereof into each of said first and second protrusions 20, 21.

The connection 13 for the control cable 105 of the forward speed of the lawn mower 100 comprises a hole 23 made in a reduced thickness zone of the circular portion 5, to which a portion of cylinder (not shown in the figures) is applied on at least one side of the disc, the portion of cylinder being suitable to house the control cable 105.

On the other hand, casing 3 comprises a first and a second half-shell 7, 8, suitable to be assembled together along a contact perimeter, except for the portion related to opening 9 (Fig. 2). At least one of the half-shells (e.g. the first half-shell 7) may comprise one or more semi-cylindrical indentations which are complementary to the rods 104, in order to adapt and stably fix casing 3 on the latter 104.

The first half-shell 7 comprises a structure 10 which mainly extends according to a plane parallel to the plane of movement of lever 2 (Fig. 3). Structure 10 is suspended in central position inside the assembled casing 3 and comprises a pair of toothed sectors 11 which are connected by means of a weave of axes 12 to the inner wall of the first half-shell 7 close to and along the contact perimeter to be assembled with the second half-shell 8. Pin 6 is made in an inner wall of the first half-shell 7, orthogonally to the vertical plane of movement of lever 2.

The toothed sectors 11 are preferably arranged symmetrically to each other to balance the forces and relative stresses on lever 2. In particular, each toothed sector 11 comprises a sequence of adjacent teeth 22 with a complementary shape with respect to that of the matching parts 17 in the circular portion 5. The teeth 22 have a curvilinear shape consisting of a concave portion in the middle, contoured by two convex or rectilinear portions (Fig. 4). With lever 2 inserted on pin 6, the elastic matching parts 17 are suitable to engage said teeth 22 of the toothed sector 11, by being inserted into the concave portion thereof. In the example at hand, each toothed sector 11 comprises seven teeth 22 corresponding to just as many speeds of the lawn mower 100.

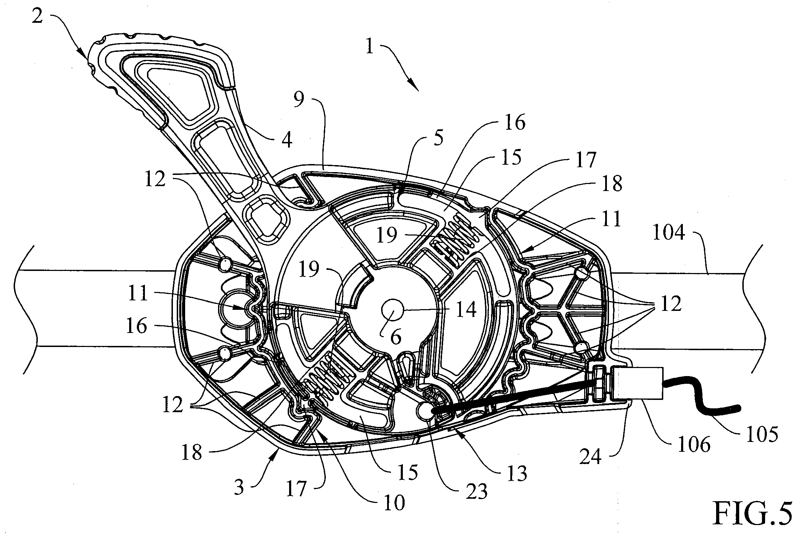

In operation, suppose at first that the lever 2 of the control apparatus 1 is in said first limit position corresponding to a minimum speed (e.g. null speed) of the lawn mower 100 (Fig. 5). The two matching parts 17 engage the two toothed sectors 11 in a respective pair of opposite teeth 22. Although the elastic means 19 (e.g. the springs) are compressed, they are in a condition of maximum extension allowed by the housings 18 in which they are located, and allow the pushing force of the matching parts 17 on the toothed sector 11 to be increased with a retaining force which ensures a stable position of lever 2.

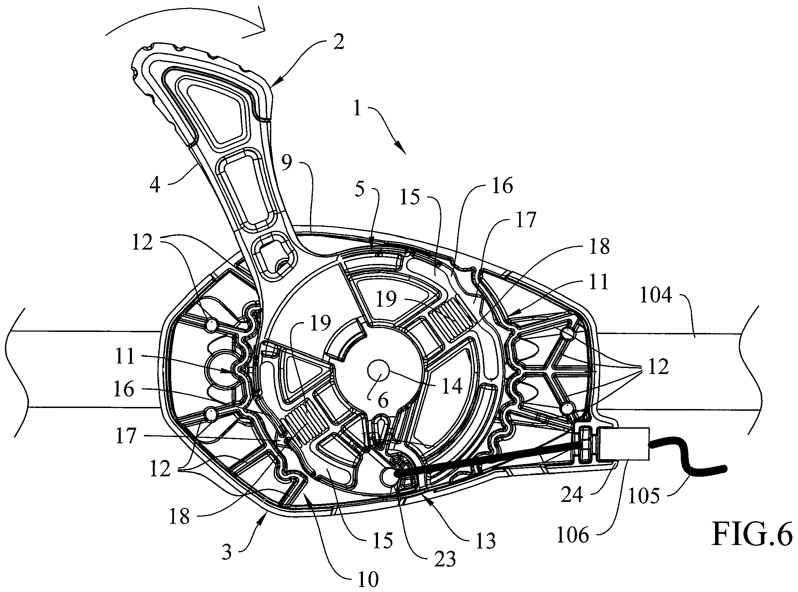

A manual movement of lever 2 by an operator (Fig. 6) to modify the forward speed of the lawn mower 100 (e.g. an acceleration) results in a rotation of the circular portion 5 about pin 6, which causes the matching parts 17 to slide along the teeth 22 with which they are engaged, thus going past the bending point between the concave and rectilinear (or otherwise convex) portions and thus being released from the teeth 22.

At this stage, each arc portion 16 with the related matching part 17 is introverted, thus compressing the elastic means 19; this allows the matching part 17 to retract to come in contact with the rectilinear portion between the tooth in which it was engaged and the adjacent tooth. For the circular portion 5 to rotate, each matching part 17 must indeed be able to retract in the radial direction, thus going past the rectilinear (or convex) portion between two adjacent teeth 22, and this occurs due to the particular shape of each of the hollow sectors 15 which, as mentioned, form a leaf spring with the arc portion 16.

By rotating lever 2, and therefore the circular portion 5, the control cable 105 is tightened, as shown in figure 5, and the forward speed of the lawn mower 100 is thus increased.

By continuing the rotation of lever 2, once the matching part 17 has gone past the rectilinear portion straddling the two adjacent teeth 22, it can engage the next tooth 22. The elastic means 19 return to a condition of maximum extension while pushing again the matching parts 17 on the toothed sectors 11 forward in the radial direction, with a retaining force which again ensures a stable position of lever 2.

As mentioned, the movement of lever 2 of the control apparatus 1 occurs on a single plane and according to a trajectory which is always linear (a straight line). When passing from the first to the second limit position (or vice versa), lever 2 takes a plurality of stable intermediate positions due to the matching parts 17 which, by engaging the respective teeth 22 of the toothed sectors 11, stably keep the position and therefore the speed preset by the operator.

Although the lawn mower 100 can be affected by vibrations during operation, the control apparatus 1, and in particular lever 2, does not modify its position, thus keeping the value of the preset magnitude related to the operation of the lawn mower 100 unaltered until the next control by the operator.

## Claims

1. Motorized lawn mower (100) comprising a cutting plate (101), provided with wheels (102), to which a handlebar (103) is connected, and a control apparatus (1) configured to vary at least one parameter related to the operation of the lawn mower (100), said control apparatus (1) comprising a manually operable lever (2) which is movable with respect to a casing (3) between a first and a second limit position corresponding respectively to a maximum value and a minimum value of said parameter, said lever (2) comprises a circular portion (5) which is pivotally coupled to the casing (3), **characterized in that** said lever (2) is provided with matching parts (17) suitable to elastically engage with at least one toothed sector (11) inside the casing (3).

2. Motorized lawn mower (100) according to claim 1, **characterized in that** said circular portion (5) is disc-shaped with a central hole (14) suitable to be inserted on a pin (6) inside the casing (3), said circular portion (5) comprising a pair of hollow sectors (15) which are arranged symmetrically with respect to the central hole (14) along a diameter (D) and having a shape such as to create a leaf spring with an arc portion (16) susceptible to introversion, said arc portion (16) of the circular portion (5) centrally comprising one of said matching parts (17) and two side elastic portions.

3. Motorized lawn mower (100) according to claim 2, **characterized in that** each of said hollow sectors (15) comprises a radial housing (18) for accommodating elastic means (19) which are suitable to offer resistance to the introversion of said arc portion (16), each housing (18) comprising a first and a second protrusion (20, 21), opposite to each other, for housing said elastic means (19).

4. Motorized lawn mower (100) according to one of claims 1-3, **characterized in that** said lever (2) is movable along a single plane and includes at least one connection (13) for connecting one end of a control cable (105) of the lawn mower (100), such that to a rotation of the lever (2) corresponds a stretch or a release of the control cable (105) and a variation of the parameter related to the operation of the lawn mower (100).

5. Motorized lawn mower (100) according to any one of the preceding claims, **characterized in that** said casing (3) comprises a first and a second half-shell (7, 8) suitable to be assembled together along a contact perimeter, except for the portion relative to an opening (9) from which the lever (2) comes out, said first half-shell (7) comprising a structure (10) that mainly extends according to a plane parallel to the plane of movement of the lever (2) and comprises a pair of said toothed sectors (11) connected by means of a weave of axes (12) to the inner wall of the first half-shell (7).

6. Motorized lawn mower (100) according to any one of the preceding claims, **characterized in that** each of said toothed sectors (11) comprises a succession of adjacent teeth (22) with a complementary shape with respect to that of the matching parts (17) in the circular portion (5).

7. Motorized lawn mower (100) according to any one of the preceding claims, **characterized in that** said matching parts (17) substantially have the form of a triangular prism and are radially directed, outwardly of the circular portion (5).

## Patentansprüche

1. Motorisierter Rasenmäher (100) mit einer mit Rädern (102) versehenen Schneideplatte (101), mit der eine Griffstange (103) verbunden ist, und einer Steuervorrichtung (1), die dazu ausgelegt ist, mindestens einen Parameter in Bezug auf den Betrieb des Rasenmähers (100) zu variieren, wobei die Steuervorrichtung (1) einen manuell betätigbaren Hebel (2) umfasst, der in Bezug auf ein Gehäuse (3) zwischen einer ersten und einer zweiten Begrenzungsposition beweglich ist, die einem Maximalwert bzw. einem Minimalwert des Parameters entsprechen, wobei der Hebel (2) einen kreisförmigen Abschnitt (5) umfasst, der schwenkbar mit dem Gehäuse (3) gekoppelt ist,
**dadurch gekennzeichnet, dass** der Hebel (2) mit Gegenpassteilen (17) versehen ist, die dafür geeignet sind, elastisch mit mindestens einem gezahnten Sektor (11) in dem Gehäuse (3) in Angriff zu gelangen.

2. Motorisierter Rasenmäher (100) nach Anspruch 1, **dadurch gekennzeichnet, dass** der kreisförmige Abschnitt (5) scheibenförmig mit einer zentralen Bohrung (14) ist, die dafür geeignet ist, auf einen Stift (6) in dem Gehäuse (3) aufgeschoben zu werden, wobei der kreisförmige Abschnitt (5) ein Paar hohle Sektoren (15) umfasst, die in Bezug auf die zentrale Bohrung (14) entlang eines Durchmessers (D) symmetrisch angeordnet sind und eine solche Form haben, dass eine Blattfeder mit einem Bogenabschnitt (16) gebildet wird, der empfindlich für ein Biegen nach innen ist, wobei der Bogenabschnitt (16) des kreisförmigen Abschnitts (5) zentral eines der Gegenpassteile (17) und zwei elastische Seitenabschnitte umfasst.

3. Motorisierter Rasenmäher (100) nach Anspruch 2, **dadurch gekennzeichnet, dass** jeder der hohlen Sektoren (15) ein radiales Gehäuse (18) zum Aufnehmen einer elastischen Einrichtung (19) umfasst, die dafür geeignet ist, einen Widerstand gegen das Biegen des Bogenabschnitts (16) nach innen zu schaffen, wobei jedes Gehäuse (18) einen ersten und einen zweiten Vorsprung (20, 21) umfasst, die einander gegenüberliegen, um die elastische Einrichtung (19) aufzunehmen.

4. Motorisierter Rasenmäher (100) nach einem der Ansprüche 1 bis 3, **dadurch gekennzeichnet, dass** der Hebel (2) entlang einer einzigen Ebene beweglich ist und mindestens eine Verbindung (13) zum Verbinden eines Endes eines Steuerkabels (105) des Rasenmähers (100) umfasst, so dass ein Drehen des Hebels (2) einer Spannung oder einer Entspannung des Steuerkabels (105) und einer Variation des Parameters in Bezug auf den Betrieb des Rasenmähers (100) entspricht.

5. Motorisierter Rasenmäher (100) nach einem der vorhergehenden Ansprüche, **dadurch gekennzeichnet, dass** das Gehäuse (3) eine erste und eine zweite Halbschale (7, 8) umfasst, die dafür geeignet sind, entlang eines Kontaktumfangs montiert zu werden, mit Ausnahme des Abschnitts relativ zu einer Öffnung (9), aus der der Hebel (2) herauskommt, wobei die erste Halbschale (7) eine Struktur (10) umfasst, die sich hauptsächlich gemäß einer Ebene parallel zu der Bewegungsebene des Hebels (2) erstreckt und ein Paar der gezahnten Sektoren (11) umfasst, die über ein Geflecht von Achsen (12) mit der Innenwand der ersten Halbschale (7) verbunden sind.

6. Motorisierter Rasenmäher (100) nach einem der vorhergehenden Ansprüche, **dadurch gekennzeichnet, dass** jeder der gezahnten Sektoren (11) eine Folge von benachbarten Zähnen (22) mit einer komplementären Form in Bezug auf die Gegenpassteile (17) in dem kreisförmigen Abschnitt (5) umfasst.

7. Motorisierter Rasenmäher (100) nach einem der vorhergehenden Ansprüche, **dadurch gekennzeichnet, dass** die Gegenstücke (17) im Wesentlichen die Form eines dreieckigen Prismas haben und radial von dem kreisförmigen Abschnitt (5) nach außen gerichtet angeordnet sind.

## Revendications

1. Tondeuse à gazon motorisée (100) comprenant une plaque de coupe (101) prévue avec des roues (102) à laquelle une poignée (103) est raccordée, et un appareil de commande (1) configuré pour modifier au moins un paramètre concernant le fonctionnement de la tondeuse à gazon (100), ledit appareil de commande (1) comprenant un levier manuel (2) qui est mobile par rapport à un carter (3) entre une première et une seconde position de limite correspondant respectivement à une valeur maximum et une valeur minimum dudit paramètre, ledit levier (2) comprend une partie circulaire (5) qui est couplée, de manière pivotante, au carter (3), **caractérisée en ce que** ledit levier (2) est prévu avec des parties complémentaires (17) appropriées pour se mettre élastiquement en prise avec au moins un secteur denté (11) à l'intérieur du carter (3).

2. Tondeuse à gazon motorisée (100) selon la revendication 1, **caractérisée en ce que** ladite partie circulaire (5) est en forme de disque avec un trou central (14) approprié pour être inséré sur une broche (6) à l'intérieur du carter (3), ladite partie circulaire (5) comprenant une paire de secteurs creux (15) qui sont agencés symétriquement par rapport au trou central (14) le long d'un diamètre (D) et ayant une forme afin de créer un ressort à lames avec une partie d'arc (16) susceptible d'introversion, ladite partie d'arc (16) de la partie circulaire (5) comprenant, de manière centrale, l'une desdites parties complémentaires (17) et deux parties latérales élastiques.

3. Tondeuse à gazon motorisée (100) selon la revendication 2, **caractérisée en ce que** chacun desdits secteurs creux (15) comprend un logement radial (18) pour loger des moyens élastiques (19) qui sont appropriés pour offrir la résistance à l'introversion de ladite partie d'arc (16), chaque boîtier (18) comprenant une première et une seconde saillie (20, 21), opposées entre elles, pour loger lesdits moyens élastiques (19).

4. Tondeuse à gazon motorisée (100) selon l'une des revendications 1 à 3, **caractérisée en ce que** ledit levier (2) est mobile le long d'un plan unique et comprend au moins un raccordement (13) pour raccorder une extrémité d'un câble de commande (105) de la tondeuse à gazon (100), de sorte qu'une rotation du levier (2) correspond à un étirement ou une libération du câble de commande (105) et une variation du paramètre concernant le fonctionnement de la tondeuse à gazon (100).

5. Tondeuse à gazon motorisée (100) selon l'une quelconque des revendications précédentes, **caractérisée en ce que** ledit carter (3) comprend une première et une seconde demi-coque (7, 8) appropriées pour être assemblées le long d'un périmètre de contact, excepté pour la partie relative à une ouverture (9) par laquelle le levier (2) sort, ladite première demi-coque (7) comprenant une structure (10) qui s'étend principalement selon un plan parallèle au plan de déplacement du levier (2) et comprend une paire desdits secteurs dentés (11) raccordés au moyen d'un tissage d'axes (12) à la paroi interne de la première demi-coque (7).

6. Tondeuse à gazon motorisée (100) selon l'une quelconque des revendications précédentes, **caractérisée en ce que** chacun desdits secteurs dentés (11) comprend une succession de dents (22) adjacentes avec une forme complémentaire par rapport à celle des parties complémentaires (17) dans la partie circulaire (5).

7. Tondeuse à gazon motorisée (100) selon l'une quelconque des revendications précédentes, **caractérisée en ce que** lesdites parties complémentaires (17) ont sensiblement la forme d'un prisme rectangulaire et sont radialement dirigées vers l'extérieur de la partie circulaire (5).
